# EUROPEAN PATENT APPLICATION

(11) **EP 3 300 444 A1**
(43) Date of publication of application: **28.03.2018**
(21) Application number: 15895905.6
(22) Date of filing: 23.06.2015
(51) Int. Cl.: H04W 72/10, H04W 72/12

(54) **RESOURCE ALLOCATION METHOD, UE AND ENODEB**

(71) Applicant: Huawei Technologies Co., Ltd., Longgang District Shenzhen, Guangdong 518129 (CN)
(72) Inventor: DENG, Qiang, Shenzhen Guangdong 518129 (CN); ZHANG, Wanqiang, Shenzhen Guangdong 518129 (CN)
(74) Representative: Körber, Martin Hans
(86) International application number: PCT/CN2015/082135
(87) International publication number: WO 2016/206005

(57) **Abstract**

The present invention provides a resource allocation method, UE, and a base station, so as to resolve a prior-art problem that because a resource cannot be allocated according to a transfer priority of a service type, data corresponding to a service type with a relatively high transfer priority is transferred with low efficiency. The method includes: determining, by UE, a first transfer priority of a first service; determining a corresponding first logical channel group according to the first transfer priority of the service; and sending, to a base station, a resource request message that carries a first logical channel group identifier indicating the first logical channel group. The base station determines a transfer priority of the UE according to the first logical channel group identifier carried in the resource request message, so as to allocate a resource to the UE. In this way, the UE may notify the base station of a transfer priority of a service by using a logical channel group, so that the base station can allocate the resource to the UE according to the transfer priority, to ensure that a resource is preferentially allocated to a service with a high transfer priority. This improves data transfer efficiency.

## Description

### TECHNICAL FIELD

The present invention relates to the field of communications technologies, and in particular, to a resource allocation method, UE, and a base station.

### BACKGROUND

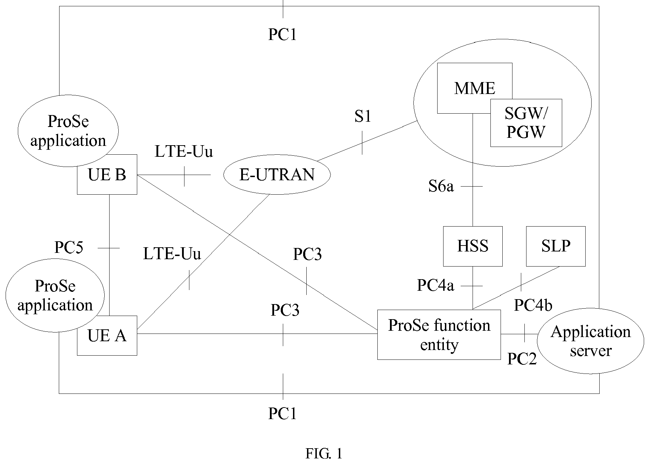

Proximity service (Proximity Service, ProSe) communication or device-to-device (Device to Device, D2D) communication is a technology in which user equipments (User Equipment, UE) directly communicate with each other. Data transfer and signaling interaction between two UEs may be directly performed on an interface between the UEs without using a network. The Service and System Aspects 2 (Service and System Aspect, SA2) in the 3^{rd} Generation Partnership Project (3^{rd} Generation Partnership Project, 3GPP) defines a ProSe network architecture shown in FIG. 1. A proximity service function (ProSe Function) entity and an application server (ProSe Application Service) are network entities defined for a ProSe service, and are used for service authorization, parameter configuration, and the like. When UE A and UE B perform ProSe communication, a base station (eNodeB, eNB) needs to allocate resources to the UE A and the UE B. After the resources are allocated, the UE A and the UE B can directly transfer data.

UE may transfer data of different service types by means of ProSe communication, and these service types include, for example, ordinary data, voice, video, and message. Different service types have different transfer priorities. For example, a transfer priority of a service type such as a voice or a video that needs to be transferred in real time is higher than a transfer priority of a service type such as ordinary data. In the prior art, because a resource cannot be allocated according to a transfer priority of a service type, data corresponding to a service type with a relatively high transfer priority is transferred with low efficiency, and user experience is compromised.

### SUMMARY

Embodiments of the present invention provide a resource allocation method, UE, and a base station, so as to resolve a prior-art problem that because a resource cannot be allocated according to a transfer priority of a service type, data corresponding to a service type with a relatively high transfer priority is transferred with low efficiency, and user experience is compromised.

According to a first aspect, a resource allocation method is provided, including:
determining, by user equipment UE, that a transfer priority of a first service is a first transfer priority;
determining, by the UE according to a correspondence between a transfer priority and a logical channel group, that a logical channel group corresponding to the first transfer priority is a first logical channel group;
sending, by the UE to a base station, a resource request message that carries a first logical channel group identifier, where the first logical channel group identifier is used to indicate the first logical channel group;
receiving, by the UE, a notification message sent by the base station, where the notification message carries information about a resource allocated by the base station to the UE; and
transferring, by the UE, the first service by using the resource.

With reference to the first aspect, in a first possible implementation, the determining, by UE, that a transfer priority of a first service is a first transfer priority includes:
determining, by the UE, a service priority of the first service;
determining, by the UE according to a correspondence between a service priority and a transfer priority, a transfer priority corresponding to the service priority of the first service; and
using the transfer priority corresponding to the service priority of the first service as the first transfer priority.

With reference to the first possible implementation of the first aspect, in a second possible implementation, before the determining a transfer priority corresponding to the service priority of the first service, the method further includes:
receiving, by the UE, the correspondence that is between a service priority and a transfer priority and that is sent by a proximity service function entity or an application server.

With reference to any one of the first aspect, or the foregoing possible implementations of the first aspect, in a third possible implementation, the correspondence between a transfer priority and a logical channel group is sent by a network side; or
the correspondence between a transfer priority and a logical channel group is determined by the UE; or
the correspondence between a transfer priority and a logical channel group is preset by the UE.

With reference to any one of the first aspect, or the foregoing possible implementations of the first aspect, in a fourth possible implementation, before the determining that a logical channel group corresponding to the first transfer priority is a first logical channel group, the method further includes:
receiving, by the UE, the correspondence that is between a transfer priority and a logical channel group and that is sent by the base station by using radio resource control RRC signaling; or
receiving, by the UE, the correspondence that is between a transfer priority and a logical channel group and that is sent by the proximity service function entity or the application server.

With reference to any one of the first aspect, or the foregoing possible implementations of the first aspect, in a fifth possible implementation, when the UE performs group communication, before the sending, by the UE to a base station, a resource request message that carries a first logical channel group identifier, the method further includes:
receiving, by the UE, a group identifier sent by the network side, where the group identifier is used to indicate that the UE is to perform communication in a group corresponding to the group identifier.

With reference to the fifth possible implementation of the first aspect, in a sixth possible implementation, the receiving, by the UE, a group identifier sent by the network side includes:
receiving a group identifier sent by the base station by using RRC signaling; or
receiving a group identifier sent by the proximity service function entity or the application server.

With reference to the fifth or the sixth possible implementation of the first aspect, in a seventh possible implementation, the sending, by the UE to a base station, a resource request message that carries a first logical channel group identifier includes:
sending, by the UE to the base station, the resource request message that carries the first logical channel group identifier and the group identifier.

According to a second aspect, a resource allocation method is provided, including:
receiving, by a base station, a resource request message that carries a logical channel group identifier and that is sent by user equipment UE;
determining, by the base station, a transfer priority of the UE according to the logical channel group identifier; and
allocating, by the base station, a resource to the UE according to the transfer priority of the UE, and notifying the UE of the allocated resource.

With reference to the second aspect, in a first possible implementation, the determining, by the base station, a transfer priority of the UE according to the logical channel group identifier includes:
determining, by the base station according to a correspondence between the transfer priority of the UE and a logical channel group, a transfer priority corresponding to a logical channel group indicated by the logical channel group identifier.

With reference to the first possible implementation of the second aspect, in a second possible implementation, the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by a proximity service function entity or an application server.

With reference to the second aspect or the first possible implementation of the second aspect, in a third possible implementation, before the determining, by the base station, a transfer priority of the UE according to the logical channel group identifier, the method further includes:
determining, by the base station, the correspondence between the transfer priority of the UE and a logical channel group.

With reference to the third possible implementation of the second aspect, in a fourth possible implementation, the determining, by the base station, the correspondence between the transfer priority of the UE and a logical channel group includes:
receiving, by the base station, a transfer priority that is supported by the UE and that is sent by a proximity service function entity or an application server; and
determining, by the base station, the correspondence between the transfer priority of the UE and a logical channel group according to the transfer priority supported by the UE.

With reference to any one of the second aspect, or the foregoing possible implementations of the second aspect, in a fifth possible implementation, the resource request message further carries a group identifier of the UE.

With reference to the fifth possible implementation of the second aspect, in a sixth possible implementation, the notifying, by the base station, the UE of the allocated resource includes:
notifying the UE of the allocated resource according to the group identifier of the UE.

With reference to any one of the second aspect, or the foregoing possible implementations of the second aspect, in a seventh possible implementation, the allocating, by the base station, a resource to the UE according to the transfer priority of the UE includes:
allocating, by the base station, the resource to the UE in descending order of transfer priorities.
According to a third aspect, a resource allocation method is provided, including:
   receiving, by a base station, a resource request message that carries a logical channel group identifier and that is sent by user equipment UE;
   determining, by the base station, a transfer priority of the UE according to the logical channel group identifier; and
   if the transfer priority of the UE is lower than a highest transfer priority of the UE, allocating, by the base station, a resource to the UE according to the transfer priority of the UE, and notifying the UE of the allocated resource.

With reference to the third aspect, in a first possible implementation, the method further includes:
receiving, by the base station, the highest transfer priority of the UE that is sent by a home subscriber server HSS; or
receiving, by the base station, the highest transfer priority of the UE that is sent by a proximity service function entity or an application server.

With reference to the third aspect or the first possible implementation of the third aspect, in a second possible implementation, the allocating, by the base station, a resource to the UE according to the transfer priority of the UE includes:
allocating, by the base station, the resource to the UE in descending order of transfer priorities.

With reference to any one of the third aspect, or the foregoing possible implementations of the third aspect, in a third possible implementation, the determining, by the base station, a transfer priority of the UE according to the logical channel group identifier includes:
determining, by the base station according to a correspondence between the transfer priority of the UE and a logical channel group, a transfer priority corresponding to a logical channel group indicated by the logical channel group identifier.

With reference to the third possible implementation of the third aspect, in a fourth possible implementation, the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by the proximity service function entity or the application server.

With reference to any one of the third aspect, or the first to the third possible implementations of the third aspect, in a fifth possible implementation, before the determining, by the base station, a transfer priority of the UE according to the logical channel group identifier, the method further includes:
determining, by the base station, the correspondence between the transfer priority of the UE and a logical channel group.

With reference to the fifth possible implementation of the third aspect, in a sixth possible implementation, the determining, by the base station, the correspondence between the transfer priority of the UE and a logical channel group includes:
receiving, by the base station, a transfer priority that is supported by the UE and that is sent by the proximity service function entity or the application server; and
determining, by the base station, the correspondence between the transfer priority of the UE and a logical channel group according to the transfer priority supported by the UE.

With reference to any one of the third aspect, or the foregoing possible implementations of the third aspect, in a seventh possible implementation, the resource request message further carries a group identifier of the UE.

With reference to the seventh possible implementation of the third aspect, in an eighth possible implementation, the notifying, by the base station, the UE of the allocated resource includes:
notifying the UE of the allocated resource according to the group identifier of the UE.

According to a fourth aspect, UE is provided, including:
a first determining unit, configured to determine that a transfer priority of a first service is a first transfer priority;
a second determining unit, configured to determine, according to a correspondence between a transfer priority and a logical channel group, that a logical channel group corresponding to the first transfer priority is a first logical channel group;
a communications unit, configured to: send, to a base station, a resource request message that carries a first logical channel group identifier, where the first logical channel group identifier is used to indicate the first logical channel group; receive a notification message sent by the base station, where the notification message carries information about a resource allocated by the base station to the UE; and transfer the first service by using the resource.

With reference to the fourth aspect, in a first possible implementation, the first determining unit is configured to:
determine a service priority of the first service;
determine, according to a correspondence between a service priority and a transfer priority, a transfer priority corresponding to the service priority of the first service; and
use the transfer priority corresponding to the service priority of the first service as the first transfer priority.

With reference to the first possible implementation of the fourth aspect, in a second possible implementation, the communications unit is further configured to:
before the first determining unit determines the transfer priority corresponding to the service priority of the first service, receive the correspondence that is between a service priority and a transfer priority and that is sent by a proximity service function entity or an application server.

With reference to any one of the fourth aspect, or the foregoing possible implementations of the fourth aspect, in a third possible implementation, the correspondence between a transfer priority and a logical channel group is sent by a network side; or
the correspondence between a transfer priority and a logical channel group is determined by the UE; or
the correspondence between a transfer priority and a logical channel group is preset by the UE.

With reference to any one of the fourth aspect, or the foregoing possible implementations of the fourth aspect, in a fourth possible implementation, the communications unit is further configured to:
before the second determining unit determines that the logical channel group corresponding to the first transfer priority is the first logical channel group, receive the correspondence that is between a transfer priority and a logical channel group and that is sent by the base station by using radio resource control RRC signaling; or
receive the correspondence that is between a transfer priority and a logical channel group and that is sent by the proximity service function entity or the application server.

With reference to any one of the fourth aspect, or the foregoing possible implementations of the fourth aspect, in a fifth possible implementation, the communications unit is further configured to:
when the UE performs group communication, before sending, to the base station, the resource request message that carries the first logical channel group identifier, receive a group identifier sent by the network side, where the group identifier is used to indicate that the UE is to perform communication in a group corresponding to the group identifier.

With reference to the fifth possible implementation of the fourth aspect, in a sixth possible implementation, that the communications unit receives a group identifier sent by the network side includes:
receiving a group identifier sent by the base station by using RRC signaling; or
receiving a group identifier sent by the proximity service function entity or the application server.

With reference to the fifth or the sixth possible implementation of the fourth aspect, in a seventh possible implementation, the communications unit is configured to:
send, to the base station, the resource request message that carries the first logical channel group identifier and the group identifier.

According to a fifth aspect, a base station is provided, including:
a receiving unit, configured to receive a resource request message that carries a logical channel group identifier and that is sent by user equipment UE;
a determining unit, configured to determine a transfer priority of the UE according to the logical channel group identifier; and
a processing unit, configured to: allocate a resource to the UE according to the transfer priority of the UE, and notify the UE of the allocated resource.

With reference to the fifth aspect, in a first possible implementation, the determining unit is configured to:
determine, according to a correspondence between the transfer priority of the UE and a logical channel group, a transfer priority corresponding to a logical channel group indicated by the logical channel group identifier.

With reference to the first possible implementation of the fifth aspect, in a second possible implementation, the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by a proximity service function entity or an application server.

With reference to the fifth aspect or the first possible implementation of the fifth aspect, in a third possible implementation, the determining unit is further configured to:
before determining the transfer priority of the UE according to the logical channel group identifier, determine the correspondence between the transfer priority of the UE and a logical channel group.

With reference to the third possible implementation of the fifth aspect, in a fourth possible implementation, when determining the correspondence between the transfer priority of the UE and a logical channel group, the determining unit is configured to:
receive a transfer priority that is supported by the UE and that is sent by a proximity service function entity or an application server; and
determine the correspondence between the transfer priority of the UE and a logical channel group according to the transfer priority supported by the UE.

With reference to any one of the fifth aspect, or the foregoing possible implementations of the fifth aspect, in a fifth possible implementation, the resource request message further carries a group identifier of the UE.

With reference to the fifth possible implementation of the fifth aspect, in a sixth possible implementation, when notifying the UE of the allocated resource, the processing unit is configured to:
notify the UE of the allocated resource according to the group identifier of the UE.

With reference to any one of the fifth aspect, or the foregoing possible implementations of the fifth aspect, in a seventh possible implementation, when allocating the resource to the UE according to the transfer priority of the UE, the processing unit is configured to:
allocate the resource to the UE in descending order of transfer priorities.

According to a sixth aspect, a base station is provided, including:
a receiving unit, configured to receive a resource request message that carries a logical channel group identifier and that is sent by user equipment UE;
a determining unit, configured to determine a transfer priority of the UE according to the logical channel group identifier; and
a processing unit, configured to: when the transfer priority of the UE is lower than a highest transfer priority of the UE, allocate a resource to the UE according to the transfer priority of the UE, and notify the UE of the allocated resource.

With reference to the sixth aspect, in a first possible implementation, the receiving unit is further configured to:
receive the highest transfer priority of the UE that is sent by a home subscriber server HSS; or
receive the highest transfer priority of the UE that is sent by a proximity service function entity or an application server.

With reference to the sixth aspect or the first possible implementation of the sixth aspect, in a second possible implementation, when allocating the resource to the UE according to the transfer priority of the UE, the processing unit is configured to:
allocate the resource to the UE in descending order of transfer priorities.

With reference to any one of the sixth aspect, or the foregoing possible implementations of the sixth aspect, in a third possible implementation, the determining unit is configured to:
determine, according to a correspondence between the transfer priority of the UE and a logical channel group, a transfer priority corresponding to a logical channel group indicated by the logical channel group identifier.

With reference to the third possible implementation of the sixth aspect, in a fourth possible implementation, the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by the proximity service function entity or the application server.

With reference to any one of the sixth aspect, or the first to the third possible implementations of the sixth aspect, in a fifth possible implementation, the determining unit is further configured to:
before determining the transfer priority of the UE according to the logical channel group identifier, determine the correspondence between the transfer priority of the UE and a logical channel group.

With reference to the fifth possible implementation of the third aspect, in a sixth possible implementation, when determining the correspondence between the transfer priority of the UE and a logical channel group, the determining unit is configured to:
receive a transfer priority that is supported by the UE and that is sent by the proximity service function entity or the application server; and
determine the correspondence between the transfer priority of the UE and a logical channel group according to the transfer priority supported by the UE.

With reference to any one of the sixth aspect, or the foregoing possible implementations of the sixth aspect, in a seventh possible implementation, the resource request message further carries a group identifier of the UE.

With reference to the seventh possible implementation of the sixth aspect, in an eighth possible implementation, when notifying the UE of the allocated resource, the processing unit is configured to:
notify the UE of the allocated resource according to the group identifier of the UE.

In the embodiments of the present invention, the UE determines that the transfer priority of the first service is the first transfer priority, determines the corresponding first logical channel group according to the first transfer priority of the service, and sends, to the base station, the resource request message that carries the first logical channel group identifier indicating the first logical channel group. The base station may determine the transfer priority of the UE according to the first logical channel group identifier carried in the resource request message, so as to allocate the resource to the UE. In this way, the UE may notify the base station of a transfer priority of a service by using a logical channel group, and the base station may learn of the transfer priority of the UE by using the logical channel group, so as to allocate the resource to the UE according to the transfer priority. A resource is allocated according to a transfer priority, to ensure that a resource is preferentially allocated to a service with a high transfer priority. This improves data transfer efficiency, and improves user experience.

### BRIEF DESCRIPTION OF DRAWINGS

FIG. 1 is a schematic diagram of a ProSe network architecture in the prior art;
FIG. 2 is a flowchart of a first resource allocation method according to an embodiment of the present invention;
FIG. 3 is a flowchart of a second resource allocation method according to an embodiment of the present invention;
FIG. 4 is a flowchart of a third resource allocation method according to an embodiment of the present invention;
FIG. 5 is a specific flowchart of a first resource allocation method according to an embodiment of the present invention;
FIG. 6 is a specific flowchart of a second resource allocation method according to an embodiment of the present invention;
FIG. 7 is a specific flowchart of a third resource allocation method according to an embodiment of the present invention;
FIG. 8 is a specific flowchart of a fourth resource allocation method according to an embodiment of the present invention;
FIG. 9 is a specific flowchart of a fifth resource allocation method according to an embodiment of the present invention;
FIG. 10 is a specific flowchart of a sixth resource allocation method according to an embodiment of the present invention;
FIG. 11 is a specific flowchart of a seventh resource allocation method according to an embodiment of the present invention;
FIG. 12 is a specific flowchart of obtaining a highest priority of UE according to an embodiment of the present invention;
FIG. 13 is a schematic structural diagram of UE according to an embodiment of the present invention;
FIG. 14 is a schematic structural diagram of a base station according to an embodiment of the present invention;
FIG. 15 is a schematic structural diagram of a base station according to an embodiment of the present invention;
FIG. 16 is a structural diagram of UE according to an embodiment of the present invention;
FIG. 17 is a structural diagram of a base station according to an embodiment of the present invention; and
FIG. 18 is a structural diagram of a base station according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by persons of ordinary skill in the art based on the embodiments of the present invention without creative efforts shall fall within the protection scope of the present invention.

The embodiments of the present invention provide a resource allocation method, UE, and a base station, so as to resolve a prior-art problem that because a resource cannot be allocated according to a transfer priority of a service type, data corresponding to a service type with a relatively high transfer priority is transferred with low efficiency, and user experience is compromised. A method embodiment and an apparatus embodiment are based on a same inventive concept. Because principles of the method embodiment and the apparatus embodiment to resolve the problem are similar, mutual reference may be made to implementations of the apparatus embodiment and the method embodiment. No repeated description is provided.

According to the technical solutions in the present invention, UE determines that a transfer priority of a first service is a first transfer priority, determines a first logical channel group corresponding to the first transfer priority, and sends, to a base station, a resource request message that carries a first logical channel group identifier indicating the first logical channel group. The base station may determine a transfer priority of the UE according to the first logical channel group identifier carried in the resource request message, so as to allocate a resource to the UE. In this way, the UE may notify the base station of a transfer priority of a service by using a logical channel group identifier, and the base station may learn of the transfer priority of the UE by using the logical channel group identifier, so as to allocate the resource to the UE according to the transfer priority. A resource is allocated according to a transfer priority, to ensure that a resource is preferentially allocated to a service with a high transfer priority. This improves data transfer efficiency, and improves user experience.

The embodiments of the present invention provide a resource allocation method, UE, and a base station that are applicable to a ProSe network architecture in which a ProSe service may be implemented. The following describes preferred implementations of the present invention in detail with reference to the accompanying drawings.

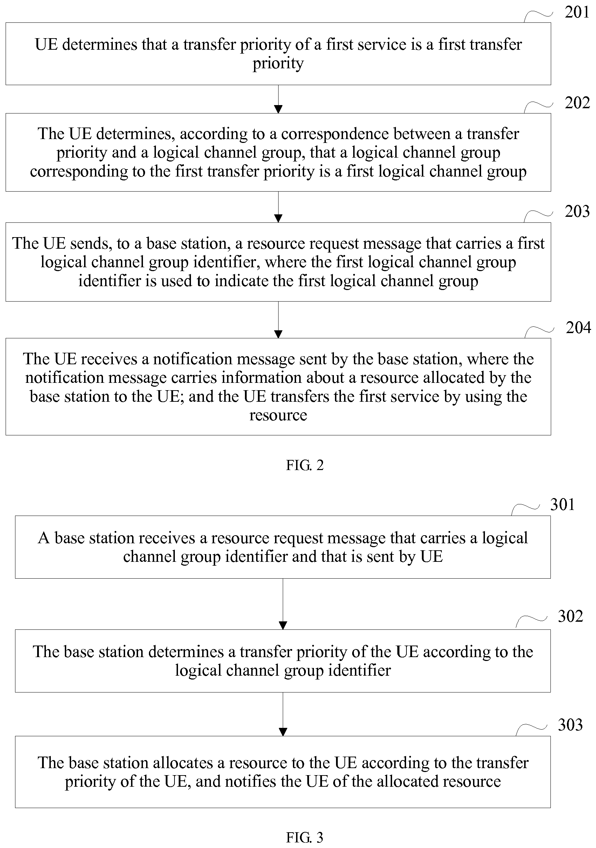

An embodiment of the present invention provides a resource allocation method, and the method is applicable to a UE side. Referring to FIG. 2, a specific procedure of the method includes the following steps.

Step 201: UE determines that a transfer priority of a first service is a first transfer priority.

Optionally, the first service is a service to be initiated by the UE, and the UE needs to communicate with another UE.

Optionally, that UE determines that a transfer priority of a first service is a first transfer priority includes:
determining, by the UE, a service priority of the first service;
determining, by the UE according to a correspondence between a service priority and a transfer priority, a transfer priority corresponding to the service priority of the first service; and
using the determined transfer priority corresponding to the service priority of the first service as the first transfer priority.

The UE may determine the service priority of the first service according to a service type of the first service, service information of the first service, or a correspondence between a service and a service priority. This is not limited in the present invention. For example, a service priority of a service app [1] is determined as a service priority [0], a service priority of a service app [2] is determined as a service priority [0], and a service priority of a service app [3] is determined as a service priority [1].

Optionally, the correspondence between a service priority and a transfer priority is sent by a network side; or
the correspondence between a service priority and a transfer priority is preset by the UE.

Optionally, when the correspondence between a service priority and a transfer priority is sent by the network side, before step 201 is performed, the method further includes: receiving, by the UE, the correspondence that is between a service priority and a transfer priority and that is sent by the network side, which specifically includes:
receiving, by the UE, the correspondence that is between a service priority and a transfer priority and that is sent by a proximity service function entity or an application server.

Step 202: The UE determines, according to a correspondence between a transfer priority and a logical channel group, that a logical channel group corresponding to the first transfer priority is a first logical channel group.

Optionally, the correspondence between a transfer priority and a logical channel group is sent by the network side; or
the correspondence between a transfer priority and a logical channel group is determined by the UE; or
the correspondence between a transfer priority and a logical channel group is preset by the UE.

Optionally, before step 202 is performed, the method further includes: receiving, by the UE, the correspondence that is between a transfer priority and a logical channel group and that is sent by the network side, which includes:
receiving, by the UE, the correspondence that is between a transfer priority and a logical channel group and that is sent by a base station by using radio resource control (Radio Resource Control, RRC) signaling; or
receiving, by the UE, the correspondence that is between a transfer priority and a logical channel group and that is sent by the proximity service function entity or the application server.

Optionally, when the correspondence between a transfer priority and a logical channel group identifier is determined by the UE, before step 202 is performed, the method further includes: determining, by the UE, the correspondence between a transfer priority and a logical channel group identifier, which includes:
receiving, by the UE, a transfer priority that is supported by the UE and that is sent by the proximity service function entity or the application server, for example, a transfer priority [0], a transfer priority [1], a transfer priority [2], or a transfer priority [3]; and
determining, by the UE, the correspondence between a transfer priority and a logical channel group according to the transfer priority supported by the UE. The UE may map the transfer priority supported by the UE to a logical channel group according to a preset rule, and determine the correspondence between a transfer priority and a logical channel group. For example, the UE establishes a correspondence between a transfer priority [0] or a transfer priority [1] and an LCG [0], and establishes a correspondence between a transfer priority [2] or a transfer priority [3] and an LCG [1].

When the UE performs group communication, before step 203 is performed, the method further includes:
receiving, by the UE, a group identifier sent by the network side, where the group identifier is used to indicate that the UE is to perform communication in a group corresponding to the group identifier.

Optionally, the receiving, by the UE, a group identifier sent by the network side includes:
receiving a group identifier sent by the base station by using RRC signaling; or
receiving a group identifier sent by the proximity service function entity or the application server.

In a current specification, four logical channel groups are defined, and logical channel group identifiers are an LCG [0], an LCG [1], an LCG [2], and an LCG [3]. A transfer priority corresponding to each logical channel group may be specifically set according to different actual scenarios. This is not limited in the present invention.

Step 203: The UE sends, to a base station, a resource request message that carries a first logical channel group identifier, where the first logical channel group identifier is used to indicate the first logical channel group.

By performing step 203, the UE sends, to the base station, the resource request message that carries the first logical channel group identifier, to request the base station to allocate a resource to the UE according to the first logical channel group identifier.

After the UE receives the group identifier sent by the network side, that the UE sends, to a base station, a resource request message that carries a first logical channel group identifier includes:
sending, by the UE to the base station, the resource request message that carries the first logical channel group identifier and the group identifier, to request the base station to allocate a resource to the UE based on the first logical channel group identifier and the group identifier.

Step 204: The UE receives a notification message sent by the base station, where the notification message carries information about a resource allocated by the base station to the UE; and the UE transfers the first service by using the resource.

After the base station allocates the resource to the UE based on the first logical channel group identifier, the base station sends the notification message to the UE, so that the UE determines, by using the notification message, the resource allocated by the UE to the UE.

According to the resource allocation method in the foregoing embodiment of the present invention, the UE determines the first transfer priority of the first service, determines the first logical channel group identifier corresponding to the first transfer priority, and sends, to the base station, the resource request message that carries the first logical channel group identifier. The base station may determine a transfer priority of the UE according to the first logical channel group identifier carried in the resource request message, so as to allocate the resource to the UE. In this way, the UE may notify the base station of a transfer priority of a service by using a logical channel group identifier, and the base station may learn of the transfer priority of the UE by using the logical channel group identifier, so as to allocate the resource to the UE according to the transfer priority. A resource is allocated according to a transfer priority, to ensure that a resource is preferentially allocated to a service with a high transfer priority. This improves data transfer efficiency, and improves user experience.

An embodiment of the present invention provides a resource allocation method, and the method is applicable to a base station side. Referring to FIG. 3, a specific procedure of the method includes the following steps.

Step 301: A base station receives a resource request message that carries a logical channel group identifier and that is sent by UE.

The logical channel group identifier is used to indicate a logical channel group determined for a first service by the UE that reports the resource request message. Specifically, a specific procedure of determining the logical channel group of the first service by the UE is step 201 and step 202 in the foregoing embodiment.

Step 302: The base station determines a transfer priority of the UE according to the logical channel group identifier.

Optionally, when step 302 is performed, the method includes:
determining, by the base station according to a correspondence between the transfer priority of the UE and a logical channel group, a transfer priority corresponding to a logical channel group indicated by the logical channel group identifier.

The correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using RRC signaling; or
the correspondence between the transfer priority of the UE and a logical channel group is sent by a proximity service function entity or an application server.

When the correspondence between the transfer priority of the UE and a logical channel group identifier is determined by the base station, before step 302 is performed, the method further includes:
determining, by the base station, the correspondence between the transfer priority of the UE and a logical channel group, which specifically includes:
   receiving, by the base station, a transfer priority that is supported by the UE and that is sent by the proximity service function entity or the application server, for example, a transfer priority [0], a transfer priority [1], a transfer priority [2], or a transfer priority [3]; and
   determining, by the base station, the correspondence between the transfer priority of the UE and a logical channel group according to the transfer priority supported by the UE. The base station may map the transfer priority supported by the UE to a logical channel group according to a preset rule, and determine the correspondence between a transfer priority and a logical channel group. For example, the base station establishes a correspondence between a transfer priority [0] or a transfer priority [1] and an LCG [0], and establishes a correspondence between a transfer priority [2] or a transfer priority [3] and an LCG [1].

Step 303: The base station allocates a resource to the UE according to the transfer priority of the UE, and notifies the UE of the allocated resource.

The base station usually receives resource request messages sent by multiple UEs, so as to determine transfer priorities of the multiple UEs. Therefore, when step 303 is performed, the base station allocates a resource to each UE in descending order of transfer priorities.

For example, a transfer priority of first UE is determined as a transfer priority [2] according to a logical channel group identifier sent by the first UE, a transfer priority of second UE is determined as a transfer priority [1] according to a logical channel group identifier sent by the second UE, and the transfer priority [1] is higher than the transfer priority [2]. In this case, a resource is preferentially allocated to the second UE, and then a resource is allocated to the first UE.

Optionally, there may be multiple transfer priorities of the UE. When there are multiple transfer priorities of the UE, a highest transfer priority or a lowest transfer priority may be selected from the multiple transfer priorities of the UE, and then the resource is allocated to the UE in descending order based on the selected highest transfer priority or the selected lowest transfer priority of the UE. This is not limited in the present invention.

Optionally, in step 301, the resource request message received by the base station further carries a group identifier.

That the base station notifies the UE of the allocated resource includes:
notifying the UE of the allocated resource according to the group identifier of the UE. Specifically, the base station notifies, of the allocated resource, all UEs in a group corresponding to the group identifier of the UE. Because the UE is in the group corresponding to the group identifier, the UE may receive a notification that is of the allocated resource and that is sent by the base station.

According to the resource allocation method in the foregoing embodiment of the present invention, the base station receives the resource request message that carries the logical channel group identifier and that is reported by the UE, determines the transfer priority of the UE according to the logical channel group identifier, allocates the resource to the UE according to the transfer priority of the UE, and notifies the UE of the allocated resource. In this way, the base station may learn of the transfer priority of the UE by using the logical channel group identifier reported by the UE, so as to allocate the resource to the UE according to the transfer priority. A resource is allocated according to a transfer priority, to ensure that a resource is preferentially allocated to a service with a high transfer priority. This improves data transfer efficiency, and improves user experience.

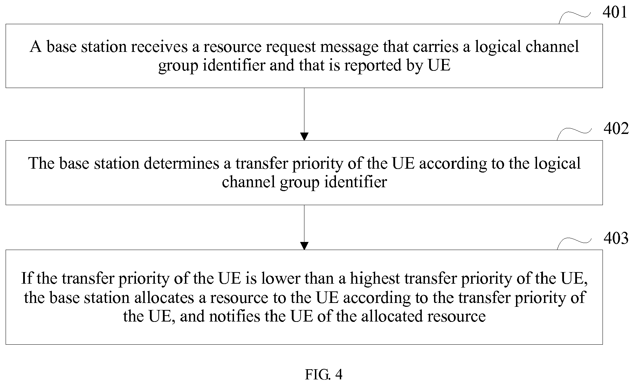

An embodiment of the present invention provides a resource allocation method, and the method is applicable to a base station side. Referring to FIG. 4, a specific procedure of the method includes the following steps.

Step 401: A base station receives a resource request message that carries a logical channel group identifier and that is reported by UE.

The logical channel group identifier is used to indicate a logical channel group determined for a first service by the UE that reports the resource request message. Specifically, a specific procedure of determining the logical channel group of the first service by the UE is step 201 and step 202 in the foregoing embodiment.

Step 402: The base station determines a transfer priority of the UE according to the logical channel group identifier.

Optionally, when step 402 is performed, the method includes:
determining, by the base station according to a correspondence between the transfer priority of the UE and a logical channel group, a transfer priority corresponding to a logical channel group indicated by the logical channel group identifier.

Optionally, the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by a proximity service function entity or an application server.

When the correspondence between the transfer priority of the UE and a logical channel group is determined by the base station, before step 402 is performed, the method further includes:
determining, by the base station, the correspondence between the transfer priority of the UE and a logical channel group, which specifically includes:
   receiving, by the base station, a transfer priority that is supported by the UE and that is sent by the proximity service function entity or the application server; and
   determining, by the base station, the correspondence between the transfer priority of the UE and a logical channel group according to the transfer priority supported by the UE.

Step 403: If the transfer priority of the UE is lower than a highest transfer priority of the UE, the base station allocates a resource to the UE according to the transfer priority of the UE, and notifies the UE of the allocated resource.

Optionally, before step 403 is performed, the method further includes: determining, by the base station, the highest transfer priority of the UE, which includes:
receiving, by the base station, the highest transfer priority of the UE that is sent by a home subscriber server (Home Subscriber Server, HSS); or
receiving, by the base station, the highest transfer priority of the UE that is sent by the proximity service function entity or the application server.

When a highest transfer priority of each UE that is sent by the HSS is received, optionally, the highest transfer priority is first sent to an MME, and then is sent by the MME to the base station.

Optionally, when step 403 is performed, the method includes:
comparing the transfer priority of the UE with the highest priority of the UE, and when it is determined that the transfer priority of the UE is lower than the highest transfer priority of the UE, allocating the resource to the UE.

Optionally, there may be multiple transfer priorities of the UE. When there are multiple determined transfer priorities of the UE, the resource may be allocated to the UE when each transfer priority of the UE is lower than the highest transfer priority of the UE.

Optionally, that the base station allocates a resource to the UE according to the transfer priority of the UE includes:
allocating, by the base station, the resource to the UE in descending order of transfer priorities.

The base station usually receives resource request messages sent by multiple UEs, so as to determine transfer priorities of the multiple UEs. Therefore, when step 403 is performed, the base station allocates a resource to each UE in descending order of transfer priorities.

Optionally, there may be multiple transfer priorities of the UE. When there are multiple transfer priorities of the UE, a highest transfer priority or a lowest transfer priority may be selected from the multiple transfer priorities of the UE, and then the resource is allocated to the UE in descending order based on the selected highest transfer priority or the selected lowest transfer priority of the UE. This is not limited in the present invention.

Optionally, in step 401, the resource request message received by the base station further carries a group identifier.

That the base station notifies the UE of the allocated resource includes:
notifying the UE of the allocated resource according to the group identifier of the UE. Specifically, the base station notifies, of the allocated resource, all UEs in a group corresponding to the group identifier of the UE. Because the UE is in the group corresponding to the group identifier, the UE may receive a notification that is of the allocated resource and that is sent by the base station.

According to the resource allocation method in the foregoing embodiment of the present invention, the base station receives the resource request message that carries the logical channel group identifier and that is reported by the UE, determines the transfer priority of the UE according to the logical channel group identifier, and when the transfer priority of the UE is lower than the highest transfer priority of the UE, allocates the resource to the UE according to the transfer priority of the UE, and notifies the UE of the allocated resource. In this way, the base station may learn of the transfer priority of the UE by using the logical channel group identifier reported by the UE, and determines, based on the highest transfer priority of the UE, whether to allocate the resource to the UE. A resource is allocated according to a transfer priority, to ensure that a resource is preferentially allocated to a service with a high transfer priority. This improves data transfer efficiency, and improves user experience.

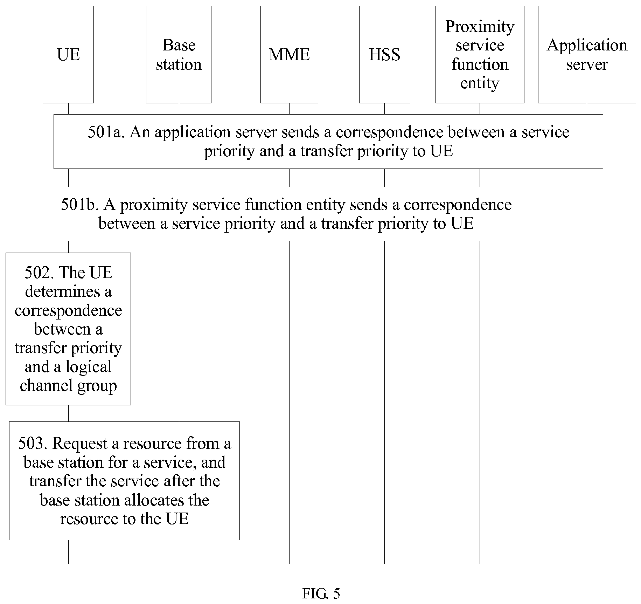

Based on the foregoing embodiment, the present invention provides a resource allocation method, applicable to a ProSe network architecture in which a ProSe service may be implemented. Referring to FIG. 5, a specific procedure of the method includes the following steps.

Step 501a: An application server sends a correspondence between a service priority and a transfer priority to UE. Alternatively, step 501b: A proximity service function entity sends a correspondence between a service priority and a transfer priority to UE.

For example, the correspondence between a service priority and a transfer priority is shown in Table 1:

**Table 1 Correspondence table between a service priority and a transfer priority**

| **Service priority** | **Transfer priority** |
|---|---|
| Service priority [0] | Transfer priority [0] |
| Service priority [1] | Transfer priority [0] |
| Service priority [2] | Transfer priority [1] |

It can be learned from Table 1 that each service priority is uniquely corresponding to one transfer priority in the correspondence between a service priority and a transfer priority.

Step 502: The UE determines a correspondence between a transfer priority and a logical channel group.

The UE may map different transfer priorities to different logical channel groups. In a current specification, four logical channel groups are defined.

The correspondence between a transfer priority and a logical channel group is shown in Table 2, and may be preset by the UE, or may be determined according to a preset rule. This is not limited in the present invention.

**Table 2 Correspondence table between a transfer priority and a logical channel group identifier**

| **Transfer priority** | **Logical channel group identifier** |
|---|---|
| Transfer priority [0] | LCG [0] |
| Transfer priority [1] | LCG [0] |
| Transfer priority [2] | LCG [1] |

It can be learned from Table 2 that each transfer priority is uniquely corresponding to one logical channel group in the correspondence between a transfer priority and a logical channel group.

Step 503: The UE requests a resource from a base station for a service, and the UE transfers the service after the base station allocates the resource to the UE.

Specifically, for a service, the UE first determines a service priority of the service; determines, according to the correspondence between a service priority and a transfer priority, that a transfer priority corresponding to the service priority of the service is a first transfer priority; determines, according to the correspondence between a transfer priority and a logical channel group, that a logical channel group corresponding to the first transfer priority is a first logical channel group; and sends, to the base station, a resource request message that carries a first logical channel group identifier indicating the first logical channel group. After allocating the resource to the UE based on the first logical channel group identifier, the base station notifies the UE of the allocated resource. The UE transfers the service based on the allocated resource, that is, performs step 503 by using the resource allocation method corresponding to FIG. 2, FIG. 3, or FIG. 4.

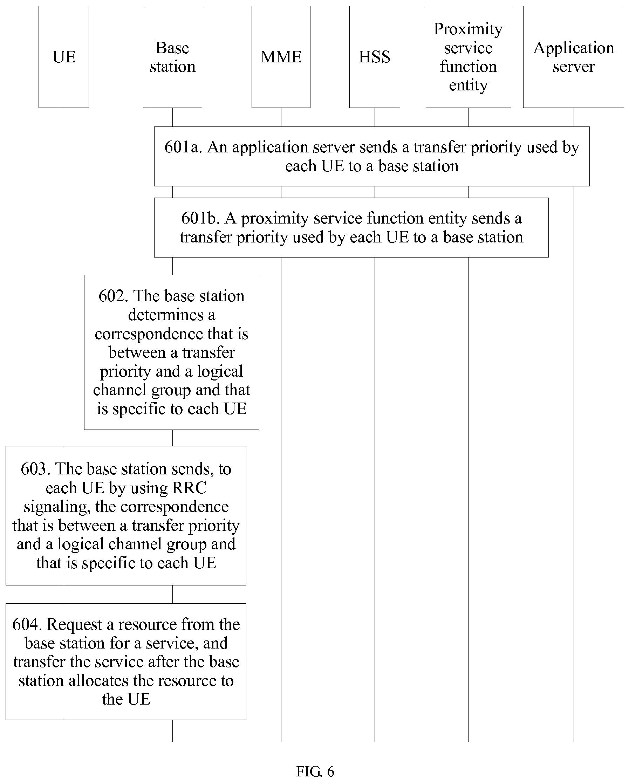

Based on the foregoing embodiment, an embodiment of the present invention further provides a resource allocation method, applicable to a ProSe network architecture in which a ProSe service may be implemented. Referring to FIG. 6, a specific procedure of the method includes the following steps.

Step 601a: An application server sends a transfer priority used by each UE to a base station. Alternatively, step 601b: A proximity service function entity sends a transfer priority used by each UE to a base station.

Optionally, when the proximity service function entity sends the transfer priority used by each UE to the base station, the transfer priority may arrive at the base station after being successively forwarded by an HSS and a mobility management entity (Mobile Management Entity, MME), or may arrive at the base station by using an MME.

Step 602: The base station determines a correspondence between a transfer priority and a logical channel group.

The base station may map different transfer priorities used by each UE to different logical channel groups for each UE. In a current specification, four logical channel groups are defined.

The correspondence between a transfer priority and a logical channel group is shown in Table 2, and may be preset by the UE, or may be determined according to a preset rule. This is not limited in the present invention.

It can be learned from Table 2 that each transfer priority is uniquely corresponding to one logical channel group in the correspondence between a transfer priority and a logical channel group.

Step 603: The base station sends, to each UE by using RRC signaling, the correspondence that is between a transfer priority and a logical channel group and that is specific to each UE.

Step 604: The UE requests a resource from the base station for a service, and the UE transfers the service after the base station allocates the resource to the UE.

Specifically, for a service, the UE first determines a service priority of the service; determines, according to the correspondence that is between a service priority and a transfer priority and that is shown in Table 1, that a transfer priority corresponding to the service priority of the service is a first transfer priority; determines, according to the obtained correspondence between a transfer priority and a logical channel group, that a logical channel group corresponding to the first transfer priority is a first logical channel group; and sends, to the base station, a resource request message that carries a first logical channel group identifier indicating the first logical channel group. After allocating the resource to the UE based on the first logical channel group identifier, the base station notifies the UE of the allocated resource. The UE transfers the service based on the allocated resource, that is, performs step 604 by using the resource allocation method corresponding to FIG. 2, FIG. 3, or FIG. 4.

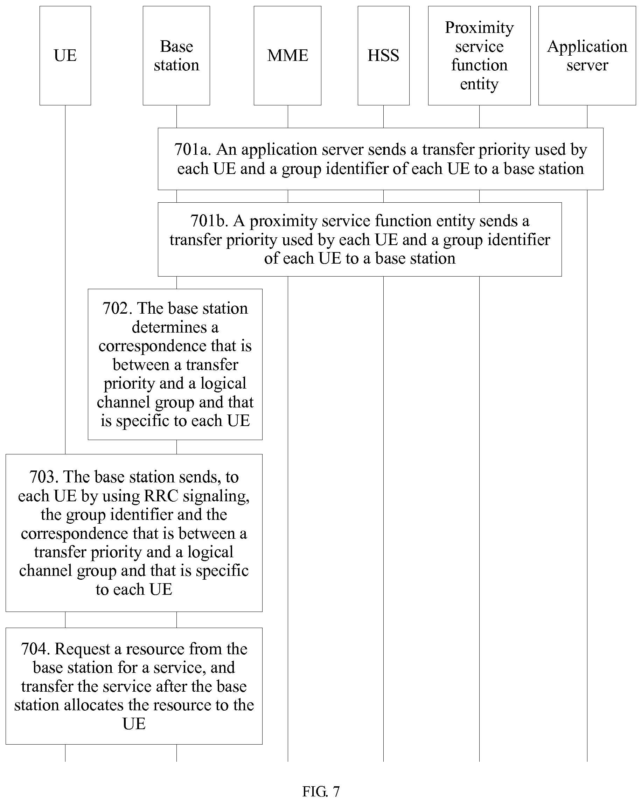

Based on the foregoing embodiment, an embodiment of the present invention further provides a resource allocation method, applicable to a ProSe network architecture in which a ProSe service may be implemented. Referring to FIG. 7, a specific procedure of the method includes the following steps.

Step 701a: An application server sends a transfer priority used by each UE and a group identifier of each UE to a base station. Alternatively, step 701b: A proximity service function entity sends a transfer priority used by each UE and a group identifier of each UE to a base station.

Optionally, when the proximity service function entity sends the transfer priority used by each UE and the group identifier to the base station, the transfer priority and the group identifier may arrive at the base station after being successively forwarded by an HSS and an MME, or may arrive at the base station by using an MME.

Step 702: The base station determines a correspondence between a transfer priority and a logical channel group.

The base station may map different transfer priorities used by each UE to different logical channel groups for each UE. In a current specification, four logical channel groups are defined.

The correspondence between a transfer priority and a logical channel group is shown in Table 2, and may be preset by the UE, or may be determined according to a preset rule. This is not limited in the present invention.

It can be learned from Table 2 that each transfer priority is uniquely corresponding to one logical channel group in the correspondence between a transfer priority and a logical channel group.

Step 703: The base station sends, to each UE by using RRC signaling, the group identifier and the correspondence that is between a transfer priority and a logical channel group and that is specific to each UE.

Step 704: The UE requests a resource from the base station for a service, and the UE transfers the service after the base station allocates the resource to the UE.

Specifically, for a service, the UE first determines a service priority of the service; determines, according to the correspondence that is between a service priority and a transfer priority and that is shown in Table 1, that a transfer priority corresponding to the service priority of the service is a first transfer priority; determines, according to the obtained correspondence between a transfer priority and a logical channel group, that a logical channel group corresponding to the first transfer priority is a first logical channel group; and sends, to the base station, a resource request message that carries the group identifier of the UE and a first logical channel group identifier indicating the first logical channel group. After allocating the resource to the UE based on the first logical channel group identifier, the base station notifies the UE of the allocated resource by using the group identifier of the UE. The UE transfers the service based on the allocated resource, that is, performs step 704 by using the resource allocation method corresponding to FIG. 2, FIG. 3, or FIG. 4.

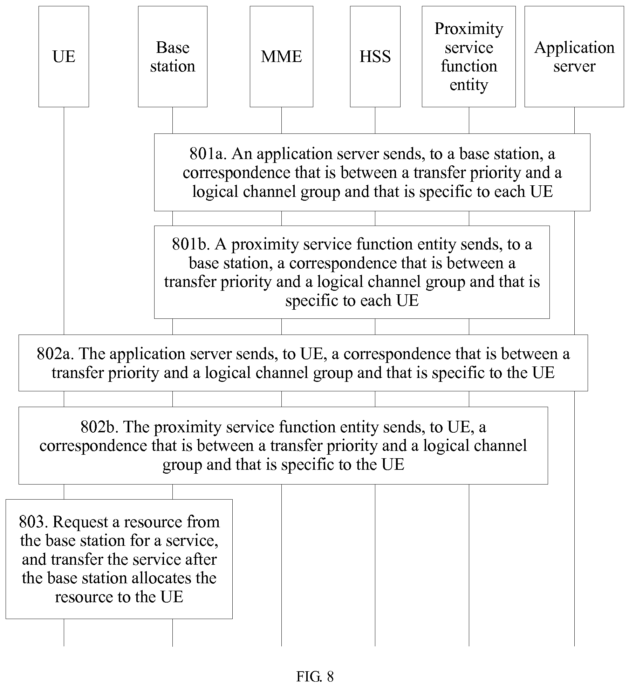

Based on the foregoing embodiment, an embodiment of the present invention further provides a resource allocation method, applicable to a ProSe network architecture in which a ProSe service may be implemented. Referring to FIG. 8, a specific procedure of the method includes the following steps.

Step 801a: An application server sends, to a base station, a correspondence that is between a transfer priority and a logical channel group and that is specific to each UE. Alternatively, step 801b: A proximity service function entity sends, to a base station, a correspondence that is between a transfer priority and a logical channel group and that is specific to each UE.

Optionally, when the proximity service function entity sends, to the base station, the correspondence that is between a transfer priority and a logical channel group and that is specific to each UE, the correspondence may arrive at the base station after being successively forwarded by an HSS and an MME, or may arrive at the base station by using an MME.

Step 802a: The application server sends, to UE, a correspondence that is between a transfer priority and a logical channel group and that is specific to the UE. Alternatively, step 802b: The proximity service function entity sends, to UE, a correspondence that is between a transfer priority and a logical channel group and that is specific to the UE.

A sequence of performing step 801 and step 802 is not limited. Step 801 may be performed first, or step 802 may be performed first, or the two steps are performed at the same time. This is not limited in the present invention.

Step 803: The UE requests a resource from the base station for a service, and the UE transfers the service after the base station allocates the resource to the UE.

Specifically, for a service, the UE first determines a service priority of the service; determines, according to the correspondence that is between a service priority and a transfer priority and that is shown in Table 1, that a transfer priority corresponding to the service priority of the service is a first transfer priority; determines, according to the obtained correspondence between a transfer priority and a logical channel group, that a logical channel group corresponding to the first transfer priority is a first logical channel group; and sends, to the base station, a resource request message that carries a first logical channel group identifier indicating the first logical channel group. After allocating the resource to the UE based on the first logical channel group identifier, the base station notifies the UE of the allocated resource. The UE transfers the service based on the allocated resource, that is, performs step 803 by using the resource allocation method corresponding to FIG. 2, FIG. 3, or FIG. 4.

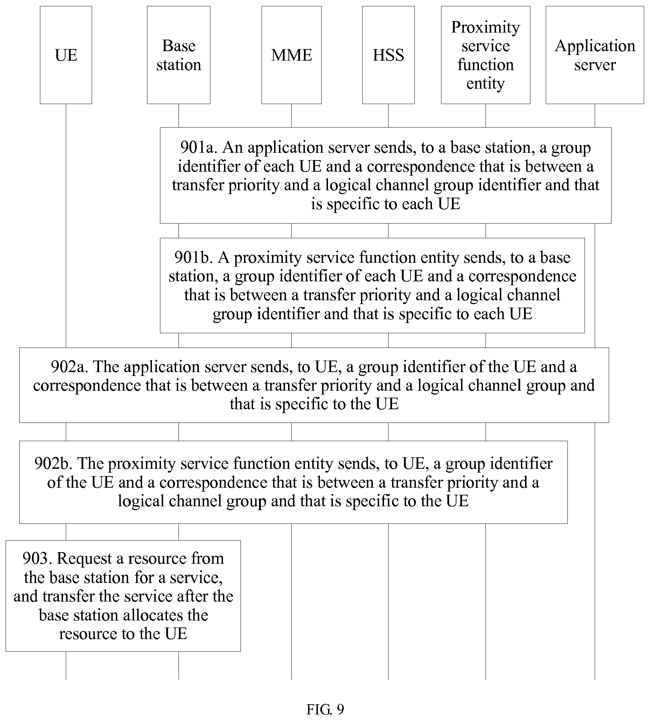

Based on the foregoing embodiment, an embodiment of the present invention further provides a resource allocation method, applicable to a ProSe network architecture in which a ProSe service may be implemented. Referring to FIG. 9, a specific procedure of the method includes the following steps.

Step 901a: An application server sends, to a base station, a group identifier of each UE and a correspondence that is between a transfer priority and a logical channel group identifier and that is specific to each UE. Alternatively, step 901b: A proximity service function entity sends, to a base station, a group identifier of each UE and a correspondence that is between a transfer priority and a logical channel group identifier and that is specific to each UE.

Optionally, when the proximity service function entity sends, to the base station, the group identifier of each UE and the correspondence that is between a transfer priority and a logical channel group and that is specific to each UE, the correspondence and the group identifier may arrive at the base station after being successively forwarded by an HSS and an MME, or may arrive at the base station by using an MME.

Step 902a: The application server sends, to UE, a group identifier of the UE and a correspondence that is between a transfer priority and a logical channel group and that is specific to the UE. Alternatively, step 902b: The proximity service function entity sends, to UE, a group identifier of the UE and a correspondence that is between a transfer priority and a logical channel group and that is specific to the UE.

A sequence of performing step 901 and step 902 is not limited. Step 901 may be performed first, or step 902 may be performed first, or the two steps are performed at the same time. This is not limited in the present invention.

Step 903: The UE requests a resource from the base station for a service, and the UE transfers the service after the base station allocates the resource to the UE.

Specifically, for a service, the UE first determines a service priority of the service; determines, according to the correspondence that is between a service priority and a transfer priority and that is shown in Table 1, that a transfer priority corresponding to the service priority of the service is a first transfer priority; determines, according to the obtained correspondence between a transfer priority and a logical channel group, that a logical channel group corresponding to the first transfer priority is a first logical channel group; and sends, to the base station, a resource request message that carries the group identifier of the UE and a first logical channel group identifier indicating the first logical channel group. After allocating the resource to the UE based on the first logical channel group identifier, the base station notifies the UE of the allocated resource by using the group identifier of the UE. The UE transfers the service based on the allocated resource, that is, performs step 903 by using the resource allocation method corresponding to FIG. 2, FIG. 3, or FIG. 4.

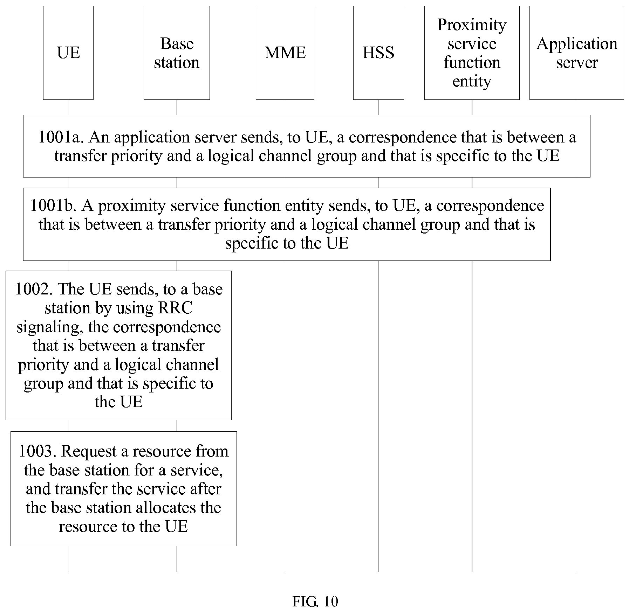

Based on the foregoing embodiment, an embodiment of the present invention further provides a resource allocation method, applicable to a ProSe network architecture in which a ProSe service may be implemented. Referring to FIG. 10, a specific procedure of the method includes the following steps.

Step 1001a: An application server sends, to UE, a correspondence that is between a transfer priority and a logical channel group and that is specific to the UE. Alternatively, step 1001b: A proximity service function entity sends, to UE, a correspondence that is between a transfer priority and a logical channel group and that is specific to the UE.

Step 1002: The UE sends, to a base station by using RRC signaling, the correspondence that is between a transfer priority and a logical channel group and that is specific to the UE.

Step 1003: The UE requests a resource from the base station for a service, and the UE transfers the service after the base station allocates the resource to the UE.

Specifically, for a service, the UE first determines a service priority of the service; determines, according to the correspondence that is between a service priority and a transfer priority and that is shown in Table 1, that a transfer priority corresponding to the service priority of the service is a first transfer priority; determines, according to the obtained correspondence between a transfer priority and a logical channel group, that a logical channel group corresponding to the first transfer priority is a first logical channel group; and sends, to the base station, a resource request message that carries a first logical channel group identifier indicating the first logical channel group. After allocating the resource to the UE based on the first logical channel group identifier, the base station notifies the UE of the allocated resource. The UE transfers the service based on the allocated resource, that is, performs step 1003 by using the resource allocation method corresponding to FIG. 2, FIG. 3, or FIG. 4.

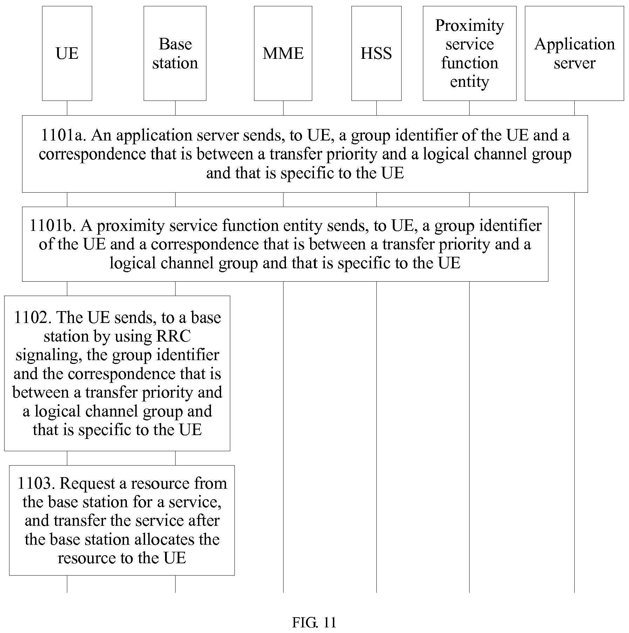

Based on the foregoing embodiment, an embodiment of the present invention further provides a resource allocation method, applicable to a ProSe network architecture in which a ProSe service may be implemented. Referring to FIG. 11, a specific procedure of the method includes the following steps.

Step 1101a: An application server sends, to UE, a group identifier of the UE and a correspondence that is between a transfer priority and a logical channel group and that is specific to the UE. Alternatively, step 1101b: A proximity service function entity sends, to UE, a group identifier of the UE and a correspondence that is between a transfer priority and a logical channel group and that is specific to the UE.

Step 1102: The UE sends, to a base station by using RRC signaling, the group identifier of the UE and the correspondence that is between a transfer priority and a logical channel group and that is specific to the UE.

Step 1103: The UE requests a resource from the base station for a service, and the UE transfers the service after the base station allocates the resource to the UE.

Specifically, for a service, the UE first determines a service priority of the service; determines, according to the correspondence that is between a service priority and a transfer priority and that is shown in Table 1, that a transfer priority corresponding to the service priority of the service is a first transfer priority; determines, according to the obtained correspondence between a transfer priority and a logical channel group, that a logical channel group corresponding to the first transfer priority is a first logical channel group; and sends, to the base station, a resource request message that carries the group identifier of the UE and a first logical channel group identifier indicating the first logical channel group. After allocating the resource to the UE based on the first logical channel group identifier, the base station notifies the UE of the allocated resource by using the group identifier of the UE. The UE transfers the service based on the allocated resource, that is, performs step 1103 by using the resource allocation method corresponding to FIG. 2, FIG. 3, or FIG. 4.

In an embodiment in which a base station allocates a resource to UE by using a determined highest transfer priority of each UE, the base station may receive a highest transfer priority of the UE that is sent by an HSS, an application server, or a proximity service function entity, to determine the highest transfer priority of each UE.

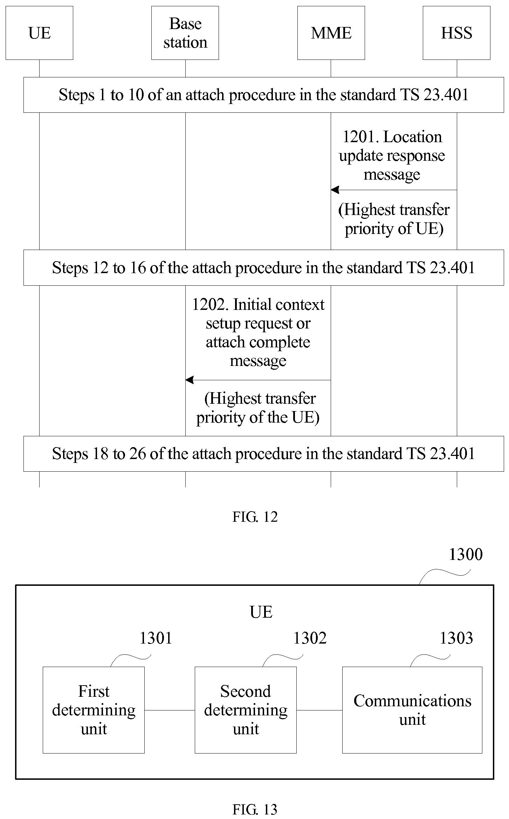

When the base station receives the highest transfer priority of each UE that is sent by the HSS, referring to FIG. 12, the HSS may first send the highest transfer priority to an MME, and then the MME may send the highest transfer priority to the base station by using an attach procedure or a tracking area update (Tracking Area Update, TAU) procedure in the prior art.

Step 1201: After steps 1 to 10 of an attach procedure in the standard TS 23.401 are performed, an HSS sends a highest transfer priority of UE to an MME by using a location update response message (Update Location ACK).

Step 1202: After steps 12 to 16 of the attach procedure in the standard TS 23.401 are performed, the MME sends the highest transfer priority of the UE to a base station by using an initial context setup request (Initial Context Setup Request) or an attach complete (Attach Accept) message, and finally completes the attach procedure after steps 18 to 26 of the attach procedure in the standard TS 23.401 are performed.

When the proximity service function entity sends the highest transfer priority of each UE, the highest transfer priority of each UE may arrive at the base station after being successively forwarded by the HSS and the MME, or the highest transfer priority of each UE is transferred to the base station after being forwarded by the MME.

Based on the foregoing embodiment, referring to FIG. 13, an embodiment of the present invention further provides UE 1300, applicable to a ProSe network architecture in which a ProSe service may be implemented. The UE 1300 includes a first determining unit 1301, a second determining unit 1302, and a communications unit 1303.

The first determining unit 1301 is configured to determine that a transfer priority of a first service is a first transfer priority.

The second determining unit 1302 is configured to determine, according to a correspondence between a transfer priority and a logical channel group, that a logical channel group corresponding to the first transfer priority is a first logical channel group.

The communications unit 1303 is configured to: send, to a base station, a resource request message that carries a first logical channel group identifier, where the first logical channel group identifier is used to indicate the first logical channel group; receive a notification message sent by the base station, where the notification message carries information about a resource allocated by the base station to the UE 1300; and transfer the first service by using the resource.

Optionally, the first determining unit 1301 is configured to:
determine a service priority of the first service;
determine, according to a correspondence between a service priority and a transfer priority, a transfer priority corresponding to the service priority of the first service; and
use the transfer priority corresponding to the service priority of the first service as the first transfer priority.

Optionally, the communications unit 1303 is further configured to:
before the first determining unit 1301 determines the transfer priority corresponding to the service priority of the first service, receive the correspondence that is between a service priority and a transfer priority and that is sent by a proximity service function entity or an application server.

Optionally, the correspondence between a transfer priority and a logical channel group is sent by a network side; or
the correspondence between a transfer priority and a logical channel group is determined by the UE 1300; or
the correspondence between a transfer priority and a logical channel group is preset by the UE 1300.

Optionally, the communications unit 1303 is further configured to:
before the second determining unit 1302 determines that the logical channel group corresponding to the first transfer priority is the first logical channel group, receive the correspondence that is between a transfer priority and a logical channel group and that is sent by the base station by using radio resource control RRC signaling; or
receive the correspondence that is between a transfer priority and a logical channel group and that is sent by the proximity service function entity or the application server.

Optionally, the communications unit 1303 is further configured to:
when the UE 1300 performs group communication, before sending, to the base station, the resource request message that carries the first logical channel group identifier, receive a group identifier sent by the network side, where the group identifier is used to indicate that the UE 1300 is to perform communication in a group corresponding to the group identifier.

Optionally, that the communications unit 1303 receives a group identifier sent by the network side includes:
receiving a group identifier sent by the base station by using RRC signaling; or
receiving a group identifier sent by the proximity service function entity or the application server.

Optionally, the communications unit 1303 is configured to:
send, to the base station, the resource request message that carries the first logical channel group identifier and the group identifier.

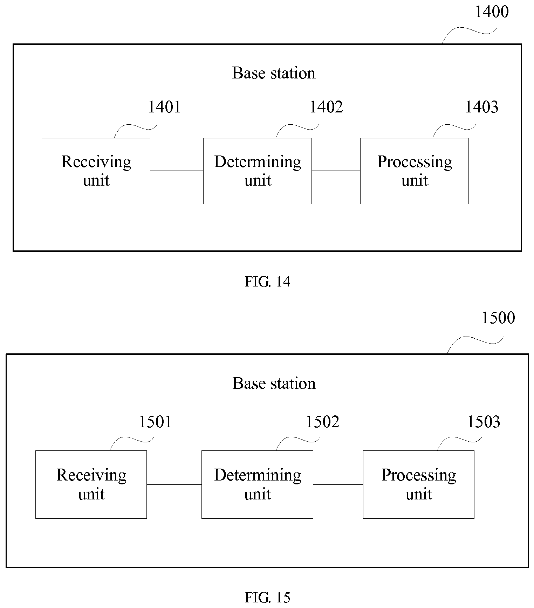

Based on the foregoing embodiment, referring to FIG. 14, an embodiment of the present invention further provides a base station 1400, applicable to a ProSe network architecture in which a ProSe service may be implemented. The base station 1400 includes a receiving unit 1401, a determining unit 1402, and a processing unit 1403.

The receiving unit 1401 is configured to receive a resource request message that carries a logical channel group identifier and that is sent by user equipment UE.

The determining unit 1402 is configured to determine a transfer priority of the UE according to the logical channel group identifier.

The processing unit 1403 is configured to: allocate a resource to the UE according to the transfer priority of the UE, and notify the UE of the allocated resource.

Optionally, the determining unit 1402 is configured to:
determine, according to a correspondence between the transfer priority of the UE and a logical channel group, a transfer priority corresponding to a logical channel group indicated by the logical channel group identifier.

Optionally, the correspondence between the transfer priority of the UE and a logical channel group is determined by the base station 1400; or
the correspondence between the transfer priority of the UE and a logical channel group is preset by the base station 1400; or
the correspondence between the transfer priority of the UE and a logical channel group is sent by the UE by using radio resource control RRC signaling; or
the correspondence between the transfer priority of the UE and a logical channel group is sent by a proximity service function entity or an application server.

Optionally, the determining unit 1402 is further configured to:
before determining the transfer priority of the UE according to the logical channel group identifier, determine the correspondence between the transfer priority of the UE and a logical channel group.

Optionally, when determining the correspondence between the transfer priority of the UE and a logical channel group, the determining unit 1402 is configured to:
receive a transfer priority that is supported by the UE and that is sent by a proximity service function entity or an application server; and
determine the correspondence between the transfer priority of the UE and a logical channel group according to the transfer priority supported by the UE.

Optionally, the resource request message further carries a group identifier of the UE.

Optionally, when notifying the UE of the allocated resource, the processing unit 1403 is configured to:
notify the UE of the allocated resource according to the group identifier of the UE.

Optionally, when allocating the resource to the UE according to the transfer priority of the UE, the processing unit 1403 is configured to:
allocate the resource to the UE in descending order of transfer priorities.

Based on the foregoing embodiment, referring to FIG. 15, an embodiment of the present invention further provides a base station 1500, applicable to a ProSe network architecture in which a ProSe service may be implemented. The base station 1500 includes a receiving unit 1501, a determining unit 1502, and a processing unit 1503.

The receiving unit 1501 is configured to receive a resource request message that carries a logical channel group identifier and that is sent by user equipment UE.

The determining unit 1502 is configured to determine a transfer priority of the UE according to the logical channel group identifier.

The processing unit 1503 is configured to: when the transfer priority of the UE is lower than a highest transfer priority of the UE, allocate a resource to the UE according to the transfer priority of the UE, and notify the UE of the allocated resource.

Optionally, the receiving unit 1501 is further configured to:
receive the highest transfer priority of the UE that is sent by a home subscriber server HSS; or
receive the highest transfer priority of the UE that is sent by a proximity service function entity or an application server.

Optionally, when allocating the resource to the UE according to the transfer priority of the UE, the processing unit 1503 is configured to:
allocate the resource to the UE in descending order of transfer priorities.

Optionally, the determining unit 1502 is configured to:
determine, according to a correspondence between the transfer priority of the UE and a logical channel group, a transfer priority corresponding to a logical channel group indicated by the logical channel group identifier.

Optionally, the correspondence between the transfer priority of the UE and a logical channel group is determined by the base station 1500; or
the correspondence between the transfer priority of the UE and a logical channel group is preset by the base station 1500; or
the correspondence between the transfer priority of the UE and a logical channel group is sent by the UE by using radio resource control RRC signaling; or
the correspondence between the transfer priority of the UE and a logical channel group is sent by the proximity service function entity or the application server.

Optionally, the determining unit 1502 is further configured to:
before determining the transfer priority of the UE according to the logical channel group identifier, determine the correspondence between the transfer priority of the UE and a logical channel group.

Optionally, when determining the correspondence between the transfer priority of the UE and a logical channel group, the determining unit 1502 is configured to:
receive a transfer priority that is supported by the UE and that is sent by the proximity service function entity or the application server; and
determine the correspondence between the transfer priority of the UE and a logical channel group according to the transfer priority supported by the UE.

Optionally, the resource request message further carries a group identifier of the UE.

Optionally, when notifying the UE of the allocated resource, the processing unit 1503 is configured to:
notify the UE of the allocated resource according to the group identifier of the UE.

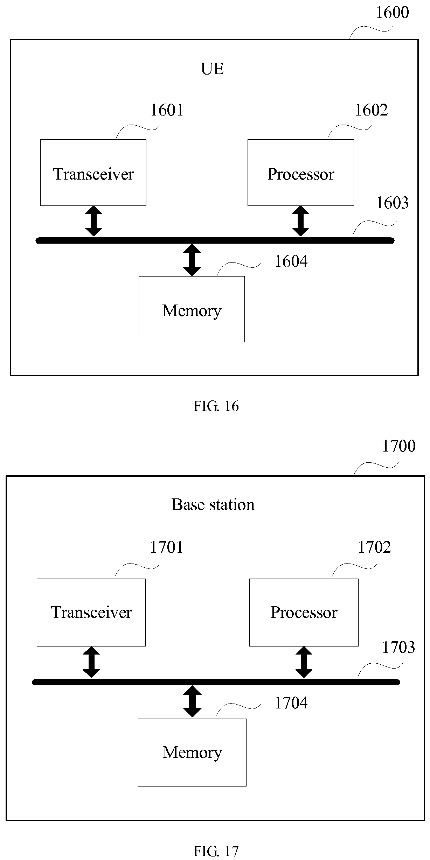

Based on the foregoing embodiment, an embodiment of the present invention further provides UE 1600, applicable to a ProSe network architecture in which a ProSe service may be implemented. Referring to FIG. 16, the UE 1600 includes a transceiver 1601, a processor 1602, a bus 1603, and a memory 1604.

The transceiver 1601, the processor 1602, and the memory 1604 are connected to each other by using the bus 1603. The bus 1603 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of illustration, the bus 1603 is indicated by using only one bold line in FIG. 16. However, this does not mean that there is only one bus or only one type of bus.

The transceiver 1601 is configured to communicate with another device, for example, to send a resource request message to a base station, to receive a notification message sent by the base station, and to transfer a service to another UE.

The processor 1602 is configured to implement the resource allocation method shown in FIG. 2 in the embodiment of the present invention. The method includes:
determining that a transfer priority of a first service is a first transfer priority;
determining, according to a correspondence between a transfer priority and a logical channel group, that a logical channel group corresponding to the first transfer priority is a first logical channel group;
sending, to a base station, a resource request message that carries a first logical channel group identifier, where the first logical channel group identifier is used to indicate the first logical channel group;
receiving a notification message sent by the base station, where the notification message carries information about a resource allocated by the base station to the UE 1600; and
transferring the first service by using the resource.

The UE 1600 further includes the memory 1604, configured to store a program. Specifically, the program may include program code, and the program code includes a computer operation instruction. The memory 1604 may include a random access memory (random access memory, RAM), or may include a non-volatile memory (non-volatile memory) such as at least one magnetic disk memory. The processor 1602 executes an application program stored in the memory 1604, to implement the resource allocation method described above.

Based on the foregoing embodiment, an embodiment of the present invention further provides a base station 1700, applicable to a ProSe network architecture in which a ProSe service may be implemented. Referring to FIG. 17, the base station 1700 includes a transceiver 1701, a processor 1702, a bus 1703, and a memory 1704.

The transceiver 1701, the processor 1702, and the memory 1704 are connected to each other by using the bus 1703. The bus 1703 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of illustration, the bus 1703 is indicated by using only one bold line in FIG. 17. However, this does not mean that there is only one bus or only one type of bus.

The transceiver 1701 is configured to communicate with another device, for example, to receive a resource request message sent by UE and to send a notification message to the UE

The processor 1702 is configured to implement the resource allocation method shown in FIG. 3 in the embodiment of the present invention. The method includes:
receiving a resource request message that carries a logical channel group identifier and that is sent by UE;
determining a transfer priority of the UE according to the logical channel group identifier; and
allocating a resource to the UE according to the transfer priority of the UE, and notifying the UE of the allocated resource.

The base station 1700 further includes the memory 1704, configured to store a program. Specifically, the program may include program code, and the program code includes a computer operation instruction. The memory 1704 may include a random access memory (random access memory, RAM), or may include a non-volatile memory (non-volatile memory) such as at least one magnetic disk memory. The processor 1702 executes an application program stored in the memory 1704, to implement the resource allocation method described above.

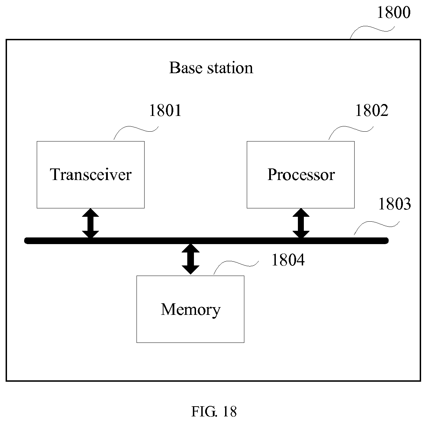

Based on the foregoing embodiment, an embodiment of the present invention further provides a base station 1800, applicable to a ProSe network architecture in which a ProSe service may be implemented. Referring to FIG. 18, the base station 1800 includes a transceiver 1801, a processor 1802, a bus 1803, and a memory 1804.

The transceiver 1801, the processor 1802, and the memory 1804 are connected to each other by using the bus 1803. The bus 1803 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of illustration, the bus 1803 is indicated by using only one bold line in FIG. 18. However, this does not mean that there is only one bus or only one type of bus.

The transceiver 1801 is configured to communicate with another device, for example, to receive a resource request message sent by UE and to send a notification message to the UE.

The processor 1802 is configured to implement the resource allocation method shown in FIG. 4 in the embodiment of the present invention. The method includes:
receiving a resource request message that carries a logical channel group identifier and that is sent by user equipment UE;
determining a transfer priority of the UE according to the logical channel group identifier; and
if the transfer priority of the UE is lower than a highest transfer priority of the UE, allocating a resource to the UE according to the transfer priority of the UE, and notifying the UE of the allocated resource.

The base station 1800 further includes the memory 1804, configured to store a program. Specifically, the program may include program code, and the program code includes a computer operation instruction. The memory 1804 may include a random access memory (random access memory, RAM), or may include a non-volatile memory (non-volatile memory) such as at least one magnetic disk memory. The processor 1802 executes an application program stored in the memory 1804, to implement the resource allocation method described above.

Based on the above, according to the resource allocation method, the UE, and the base station provided in the embodiments of the present invention, for a service, the UE determines the corresponding first logical channel group according to the first transfer priority of the service, and sends, to the base station, the resource request message that carries the first logical channel group identifier indicating the first logical channel group. The base station may determine the transfer priority of the UE according to the first logical channel group identifier carried in the resource request message, so as to allocate the resource to the UE. In this way, the UE may notify the base station of a transfer priority of a service by using a logical channel group identifier, and the base station may learn of the transfer priority of the UE by using the logical channel group identifier, so as to allocate the resource to the UE according to the transfer priority. A resource is allocated according to a transfer priority, to ensure that a resource is preferentially allocated to a service with a high transfer priority. This improves data transfer efficiency, and improves user experience.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A resource allocation method, comprising:
determining, by user equipment UE, that a transfer priority of a first service is a first transfer priority;
determining, by the UE according to a correspondence between a transfer priority and a logical channel group, that a logical channel group corresponding to the first transfer priority is a first logical channel group;
sending, by the UE to a base station, a resource request message that carries a first logical channel group identifier, wherein the first logical channel group identifier is used to indicate the first logical channel group;
receiving, by the UE, a notification message sent by the base station, wherein the notification message carries information about a resource allocated by the base station to the UE; and
transferring, by the UE, the first service by using the resource.

2. The method according to claim 1, wherein the determining, by UE, that a transfer priority of a first service is a first transfer priority comprises:
determining, by the UE, a service priority of the first service;
determining, by the UE according to a correspondence between a service priority and a transfer priority, a transfer priority corresponding to the service priority of the first service; and
using the transfer priority corresponding to the service priority of the first service as the first transfer priority.

3. The method according to claim 2, wherein before the determining a transfer priority corresponding to the service priority of the first service, the method further comprises:
receiving, by the UE, the correspondence that is between a service priority and a transfer priority and that is sent by a proximity service function entity or an application server.

4. The method according to any one of claims 1 to 3, wherein the correspondence between a transfer priority and a logical channel group is sent by a network side; or
the correspondence between a transfer priority and a logical channel group is determined by the UE; or the correspondence between a transfer priority and a logical channel group is preset by the UE.

5. The method according to any one of claims 1 to 4, wherein before the determining that a logical channel group corresponding to the first transfer priority is a first logical channel group, the method further comprises:
receiving, by the UE, the correspondence that is between a transfer priority and a logical channel group and that is sent by the base station by using radio resource control RRC signaling; or
receiving, by the UE, the correspondence that is between a transfer priority and a logical channel group and that is sent by the proximity service function entity or the application server.

6. The method according to any one of claims 1 to 5, wherein when the UE performs group communication, before the sending, by the UE to a base station, a resource request message that carries a first logical channel group identifier, the method further comprises:
receiving, by the UE, a group identifier sent by the network side, wherein the group identifier is used to indicate that the UE is to perform communication in a group corresponding to the group identifier.

7. The method according to claim 6, wherein the receiving, by the UE, a group identifier sent by the network side comprises:
receiving a group identifier sent by the base station by using RRC signaling; or
receiving a group identifier sent by the proximity service function entity or the application server.

8. The method according to claim 6 or 7, wherein the sending, by the UE to a base station, a resource request message that carries a first logical channel group identifier comprises:
sending, by the UE to the base station, the resource request message that carries the first logical channel group identifier and the group identifier.

9. A resource allocation method, comprising:
receiving, by a base station, a resource request message that carries a logical channel group identifier and that is sent by user equipment UE;
determining, by the base station, a transfer priority of the UE according to the logical channel group identifier; and
allocating, by the base station, a resource to the UE according to the transfer priority of the UE, and notifying the UE of the allocated resource.

10. The method according to claim 9, wherein the determining, by the base station, a transfer priority of the UE according to the logical channel group identifier comprises:
determining, by the base station according to a correspondence between the transfer priority of the UE and a logical channel group, a transfer priority corresponding to a logical channel group indicated by the logical channel group identifier.

11. The method according to claim 10, wherein the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by a proximity service function entity or an application server.

12. The method according to claim 9 or 10, wherein before the determining, by the base station, a transfer priority of the UE according to the logical channel group identifier, the method further comprises:
determining, by the base station, the correspondence between the transfer priority of the UE and a logical channel group.

13. The method according to claim 12, wherein the determining, by the base station, the correspondence between the transfer priority of the UE and a logical channel group comprises:
receiving, by the base station, a transfer priority that is supported by the UE and that is sent by a proximity service function entity or an application server; and
determining, by the base station, the correspondence between the transfer priority of the UE and a logical channel group according to the transfer priority supported by the UE.

14. The method according to any one of claims 9 to 13, wherein the resource request message further carries a group identifier of the UE.

15. The method according to claim 14, wherein the notifying, by the base station, the UE of the allocated resource comprises:
notifying the UE of the allocated resource according to the group identifier of the UE.

16. The method according to any one of claims 9 to 15, wherein the allocating, by the base station, a resource to the UE according to the transfer priority of the UE comprises:
allocating, by the base station, the resource to the UE in descending order of transfer priorities.

17. A resource allocation method, comprising:
receiving, by a base station, a resource request message that carries a logical channel group identifier and that is sent by user equipment UE;
determining, by the base station, a transfer priority of the UE according to the logical channel group identifier; and
if the transfer priority of the UE is lower than a highest transfer priority of the UE, allocating, by the base station, a resource to the UE according to the transfer priority of the UE, and notifying the UE of the allocated resource.

18. The method according to claim 17, wherein the method further comprises:
receiving, by the base station, the highest transfer priority of the UE that is sent by a home subscriber server HSS; or
receiving, by the base station, the highest transfer priority of the UE that is sent by a proximity service function entity or an application server.

19. The method according to claim 17 or 18, wherein the allocating, by the base station, a resource to the UE according to the transfer priority of the UE comprises:
allocating, by the base station, the resource to the UE in descending order of transfer priorities.

20. The method according to any one of claims 17 to 19, wherein the determining, by the base station, a transfer priority of the UE according to the logical channel group identifier comprises:
determining, by the base station according to a correspondence between the transfer priority of the UE and a logical channel group, a transfer priority corresponding to a logical channel group indicated by the logical channel group identifier.

21. The method according to claim 20, wherein the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by the proximity service function entity or the application server.

22. The method according to any one of claims 17 to 20, wherein before the determining, by the base station, a transfer priority of the UE according to the logical channel group identifier, the method further comprises:
determining, by the base station, the correspondence between the transfer priority of the UE and a logical channel group.

23. The method according to claim 22, wherein the determining, by the base station, the correspondence between the transfer priority of the UE and a logical channel group comprises:
receiving, by the base station, a transfer priority that is supported by the UE and that is sent by the proximity service function entity or the application server; and
determining, by the base station, the correspondence between the transfer priority of the UE and a logical channel group according to the transfer priority supported by the UE.

24. The method according to any one of claims 17 to 23, wherein the resource request message further carries a group identifier of the UE.

25. The method according to claim 24, wherein the notifying, by the base station, the UE of the allocated resource comprises:
notifying the UE of the allocated resource according to the group identifier of the UE.

26. UE, comprising:
a first determining unit, configured to determine that a transfer priority of a first service is a first transfer priority;
a second determining unit, configured to determine, according to a correspondence between a transfer priority and a logical channel group, that a logical channel group corresponding to the first transfer priority is a first logical channel group;
a communications unit, configured to: send, to a base station, a resource request message that carries a first logical channel group identifier, wherein the first logical channel group identifier is used to indicate the first logical channel group; receive a notification message sent by the base station, wherein the notification message carries information about a resource allocated by the base station to the UE; and transfer the first service by using the resource.

27. The method according to claim 26, wherein the first determining unit is configured to:
determine a service priority of the first service;
determine, according to a correspondence between a service priority and a transfer priority, a transfer priority corresponding to the service priority of the first service; and
use the transfer priority corresponding to the service priority of the first service as the first transfer priority.

28. The method according to claim 27, wherein the communications unit is further configured to:
before the first determining unit determines the transfer priority corresponding to the service priority of the first service, receive the correspondence that is between a service priority and a transfer priority and that is sent by a proximity service function entity or an application server.

29. The method according to any one of claims 26 to 28, wherein the correspondence between a transfer priority and a logical channel group is sent by a network side; or
the correspondence between a transfer priority and a logical channel group is determined by the UE; or
the correspondence between a transfer priority and a logical channel group is preset by the UE.

30. The method according to any one of claims 26 to 29, wherein the communications unit is further configured to:
before the second determining unit determines that the logical channel group corresponding to the first transfer priority is the first logical channel group, receive the correspondence that is between a transfer priority and a logical channel group and that is sent by the base station by using radio resource control RRC signaling; or
receive the correspondence that is between a transfer priority and a logical channel group and that is sent by the proximity service function entity or the application server.

31. The method according to any one of claims 26 to 30, wherein the communications unit is further configured to:
when the UE performs group communication, before sending, to the base station, the resource request message that carries the first logical channel group identifier, receive a group identifier sent by the network side, wherein the group identifier is used to instruct the UE to perform communication in a group corresponding to the group identifier.

32. The method according to claim 31, wherein the receiving a group identifier sent by the network side comprises:
receiving a group identifier sent by the base station by using RRC signaling; or
receiving a group identifier sent by the proximity service function entity or the application server.

33. The method according to claim 31 or 32, wherein the communications unit is configured to:
send, to the base station, the resource request message that carries the first logical channel group identifier and the group identifier.

34. Abase station, comprising:
a receiving unit, configured to receive a resource request message that carries a logical channel group identifier and that is sent by user equipment UE;
a determining unit, configured to determine a transfer priority of the UE according to the logical channel group identifier; and
a processing unit, configured to: allocate a resource to the UE according to the transfer priority of the UE, and notify the UE of the allocated resource.

35. The method according to claim 34, wherein the determining unit is configured to:
determine, according to a correspondence between the transfer priority of the UE and a logical channel group, a transfer priority corresponding to a logical channel group indicated by the logical channel group identifier.

36. The method according to claim 35, wherein the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by a proximity service function entity or an application server.

37. The method according to claim 34 or 35, wherein the determining unit is further configured to:
before determining the transfer priority of the UE according to the logical channel group identifier, determine the correspondence between the transfer priority of the UE and a logical channel group.

38. The method according to claim 37, wherein when determining the correspondence between the transfer priority of the UE and a logical channel group, the determining unit is configured to:
receive a transfer priority that is supported by the UE and that is sent by a proximity service function entity or an application server; and
determine the correspondence between the transfer priority of the UE and a logical channel group according to the transfer priority supported by the UE.

39. The method according to any one of claims 34 to 38, wherein the resource request message further carries a group identifier of the UE.

40. The method according to claim 39, wherein when notifying the UE of the allocated resource, the processing unit is configured to:
notify the UE of the allocated resource according to the group identifier of the UE.

41. The method according to any one of claims 34 to 40, wherein when allocating the resource to the UE according to the transfer priority of the UE, the processing unit is configured to:
allocate the resource to the UE in descending order of transfer priorities.

42. Abase station, comprising:
a receiving unit, configured to receive a resource request message that carries a logical channel group identifier and that is sent by user equipment UE;
a determining unit, configured to determine a transfer priority of the UE according to the logical channel group identifier; and
a processing unit, configured to: when the transfer priority of the UE is lower than a highest transfer priority of the UE, allocate a resource to the UE according to the transfer priority of the UE, and notify the UE of the allocated resource.

43. The method according to claim 42, wherein the receiving unit is further configured to:
receive the highest transfer priority of the UE that is sent by a home subscriber server HSS; or
receive the highest transfer priority of the UE that is sent by a proximity service function entity or an application server.

44. The method according to claim 42 or 43, wherein when allocating the resource to the UE according to the transfer priority of the UE, the processing unit is configured to:
allocate the resource to the UE in descending order of transfer priorities.

45. The method according to any one of claims 42 to 44, wherein the determining unit is configured to:
determine, according to a correspondence between the transfer priority of the UE and a logical channel group, a transfer priority corresponding to a logical channel group indicated by the logical channel group identifier.

46. The method according to claim 45, wherein the correspondence between the transfer priority of the UE and a logical channel group is determined by the base station; or
the correspondence between the transfer priority of the UE and a logical channel group is preset by the base station; or
the correspondence between the transfer priority of the UE and a logical channel group is sent by the UE by using radio resource control RRC signaling; or
the correspondence between the transfer priority of the UE and a logical channel group is sent by the proximity service function entity or the application server.

47. The method according to any one of claims 42 to 45, wherein the determining unit is further configured to:
before determining the transfer priority of the UE according to the logical channel group identifier, determine the correspondence between the transfer priority of the UE and a logical channel group.

48. The method according to claim 47, wherein when determining the correspondence between the transfer priority of the UE and a logical channel group, the determining unit is configured to:
receive a transfer priority that is supported by the UE and that is sent by the proximity service function entity or the application server; and
determine the correspondence between the transfer priority of the UE and a logical channel group according to the transfer priority supported by the UE.

49. The method according to any one of claims 42 to 48, wherein the resource request message further carries a group identifier of the UE.

50. The method according to claim 49, wherein when notifying the UE of the allocated resource, the processing unit is configured to:
notify the UE of the allocated resource according to the group identifier of the UE.
